# EUROPÄISCHE PATENTSCHRIFT

(11) **EP 3 667 389 B1**
(45) Veröffentlichungstag und Bekanntmachung des Hinweises auf die Patenterteilung: **15.03.2023**
(21) Anmeldenummer: 18211672.3
(22) Anmeldetag: 11.12.2018
(51) Int. Cl.: G02B 19/00, F21V 5/04, G02B 3/08, F21S 41/143, F21S 41/24, F21S 41/25, F21S 41/275, F21S 41/32, F21S 43/20, F21S 43/31

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR UN VÉHICULE AUTOMOBILE

(43) Veröffentlichungstag der Anmeldung: 17.06.2020
(73) Patentinhaber: ZKW Group GmbH, 3250 Wieselburg (AT)
(72) Erfinder: Ecker-Endl, Markus, 3500 Krems an der Donau (AT); Moser, Martin, 3033 Altlengbach (AT)
(74) Vertreter: Patentanwaltskanzlei Matschnig & Forsthuber OG

(56) Entgegenhaltungen:
- DE-A1- 3 317 519
- DE-A1-102015 226 633
- DE-A1-102017 208 241
- DE-C- 603 666
- US-A- 3 883 733
- US-A- 4 755 921
- US-A1- 2007 064 431

## Beschreibung

Die Erfindung betrifft eine Beleuchtungsvorrichtung für einen Kraftfahrzeugscheinwerfer und/oder für eine Heckleuchte eines Kraftfahrzeuges und/oder für eine Signalleuchte für einen Kraftfahrzeugscheinwerfer zum Erzeugen einer Lichtverteilung oder einer Teillichtverteilung oder eines Zwischenlichtbildes, wobei die Beleuchtungsvorrichtung einen Optikkörper, im Folgenden als TIR-Optikkörper bezeichnet, sowie eine Anzahl von Lichtquellen, insbesondere LED-Lichtquellen umfasst, wobei z.B. genau eine Lichtquelle oder zwei oder mehr als zwei Lichtquellen vorgesehen sind, wobei der TIR-Optikkörper aus einem optisch transparenten Material gebildet ist, wobei der TIR-Optikkörper einen Lichteinkoppelbereich und eine Lichtaustrittsfläche aufweist, wobei Licht der Lichtquellen, welches über den Lichteinkoppelbereich in den TIR-Optikkörper eingespeist wird, zumindest teilweise über die Lichtaustrittsfläche austritt und wobei der TIR-Optikkörper in einer ersten Richtung, welche quer zu einer optischen Achse des TIR-Optikkörpers verläuft, von zwei einander gegenüberliegenden Begrenzungsflächen begrenzt wird, wobei der Lichteinkoppelbereich in einer zweiten Richtung, welche quer zu der optischen Achse des TIR-Optikkörpers sowie quer zu der ersten Richtung verläuft, Seiten-Einkoppelflächen aufweist, und wobei der Lichteinkoppelbereich weiters eine zentrale Lichteinkoppelfläche aufweist, wobei die zentrale Lichteinkoppelfläche an die beiden Seiten-Einkoppelflächen angrenzt bzw. an diese anstößt, und wobei Licht der zumindest einen Lichtquelle über die zentrale Lichteinkoppelfläche sowie über die, insbesondere zwei, Seiten-Einkoppelflächen in den TIR-Optikkörper eingespeist werden kann, welches sich in dem TIR-Optikkörper fortpflanzt und als Lichtbündel über die Lichtaustrittsfläche aus dem TIR-Optikkörper austritt.

Weiters betrifft die Erfindung eine Vorrichtung umfassend ein oder mehrere solcher Beleuchtungsvorrichtungen, beispielsweise zum Erzeugen einer Fernlichtverteilung, einer Abblendlichtverteilung, einer Nebellichtverteilung, einer Vorfeldlichtverteilung, einer Nebellichtverteilung, einer Lichtverteilung einer Signallichtfunktion, z.B. eines Tagfahrlichtes, eines Fahrtrichtungsanzeiger oder einer Bremsleuchte, oder eines Teiles einer der genannten Lichtverteilungen, wobei die Vorrichtung ein Kraftfahrzeugscheinwerfer oder eine Heckleuchte für ein Kraftfahrzeug oder eine Signalleuchte für ein Kraftfahrzeug ist, und wobei im Falle von mehreren Beleuchtungsvorrichtungen vorzugsweise alle Beleuchtungsvorrichtungen identisch sind, und wobei beispielsweise, wenn zwei oder mehr Beleuchtungsvorrichtungen vorgesehen sind, diese vorzugsweise unmittelbar nebeneinander, insbesondere aneinander angrenzend, angeordnet sind, vorzugsweise derart, dass die Lichtquellen der verschiedenen Beleuchtungsvorrichtungen auf einer Linie liegen.

In der Entwicklung von Fahrzeugscheinwerfern spielt das Design eine immer stärkere Rolle. Durch den zunehmend beschränkten Bauraum sind kompaktere Optiken zur Erfüllung der gesetzlich geforderten Lichtwerte notwendig. Insbesondere wenn mehrere Lichtquellen, bei welchen es sich typischer Weise um LED's handelt, zur Erreichung der gesetzlichen Anforderungen erforderlich sind, stoßen Lösungen mit konventionellen TIR-Linsen (TIR: *"total internal reflection"*)*,* auch als TIR-Optikkörper bezeichnet, schnell an ihre Grenzen, da diese häufig nur für maximal 1 bis 2 LED's ausgelegt werden können.

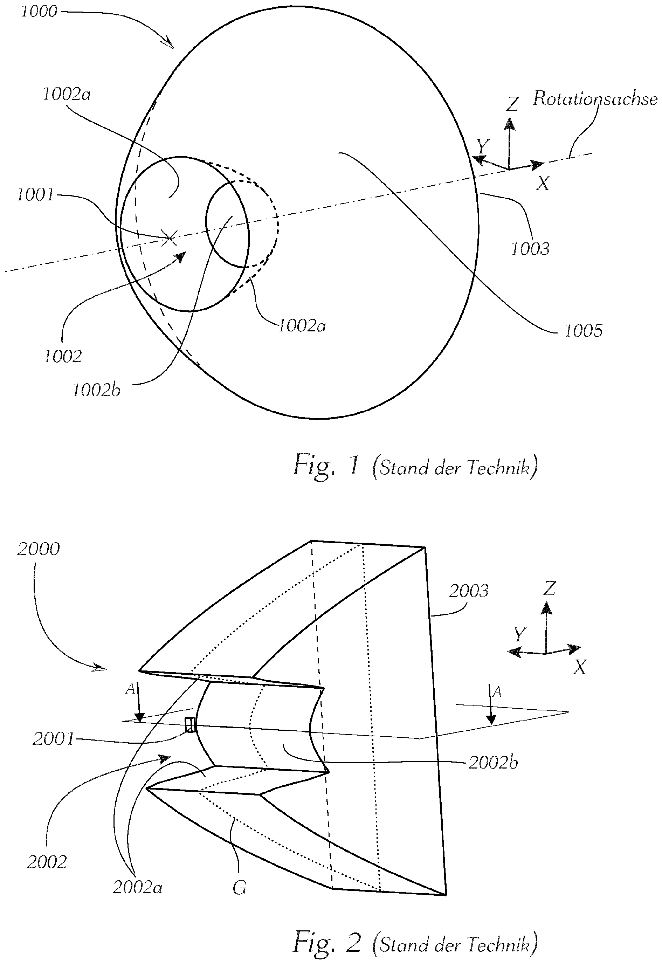

Beispielsweise zeigt **Figur 1** einen aus dem Stand der Technik bekannten, um eine optische Achse X rotationssymmetrischen Optikkörper, insbesondere ein TIR-Optikkörper 1000. Der TIR-Optikkörper ist ein Vollkörper aus einem optisch transparenten Material. Eine Lichtquelle 1001 sitzt in einer Vertiefung, dem sogenannten Lichteinkoppelbereich 1002 des TIR-Optikkörpers 1000, das von der Lichtquellen 1001 über diese Lichteinkoppelbereich 1002 eingespeiste Licht pflanzt sich in dem Körper 1000 fort und tritt über eine Lichtaustrittsfläche 1003 zur Bildung einer Lichtverteilung oder einer Teillichtverteilung aus. Der TIR-Optikkörper wird von einer oder mehreren seitlichen Begrenzungsflächen 1005 begrenzt, wobei Licht, welches sich in dem TIR-Optikkörper 1000 fortpflanzt und auf dieser Begrenzungsfläche 1005 bzw. diesen Begrenzungsflächen auftrifft, totalreflektiert wird.

Wie gut zu erkennen ist, ist der Lichteinkoppelbereich 1002 lediglich an einer der Lichtaustrittsfläche 1003 abgewandten Seite offen, an allen anderen Seiten umschließt der Bereich 1002 die Lichtquelle mit einer Begrenzungswand oder mehreren Begrenzungswänden 1002a, 1002b. Bei Verwendung einer LED als Lichtquelle 1001 kann so erreicht werden, dass der gesamte von der LED austretende Lichtstrom über diese Begrenzungswände 1002a, 1002b des Lichteinkoppelbereiches 1002 in den Optikkörper 1000 eintreten kann.

Dadurch, dass die den Lichteinkoppelbereich 1002 begrenzenden Wände 1002a des Optikkörpers 1000 auch relativ nahe zu der Lichtquelle 1001 angeordnet werden können, kann auf einfache Weise sichergestellt werden, dass das in den TIR-Optikkörper 1000 eintretende Licht im Wesentlichen parallel gerichtet wird, und z.B. im Fall einer ebenen Lichtaustrittsfläche als Parallellichtbündel aus dem TIR-Optikkörper 1000 austreten kann.

In jedem Fall kann bei Verwendung von lediglich einer Lichtquelle, insbesondere LED, ein homogenes Lichtbild oder Teillichtbild mit einem solchen TIR-Optikkörper sichergestellt werden.

Häufig wird neben dem Begriff TIR-Optik(körper) für einen solchen Optikkörper (und die im Folgenden beschriebenen Optikkörper), insbesondere auch den oben beschriebenen rotationssymmetrischen Optikkörper, auch der Begriff als CPC-Optik ("Compound-Parabolic-Concentrator") verwendet oder es handelt sich bei der TIR-Optik um eine CPC-Optik, da häufig neben der totalreflektierenden Außenwand 1005 der Zentrumsbereich 1002b eine klassische Linsengrenzfläche darstellt.

Bei Verwendung von zwei oder mehr Lichtquellen stoßen allerdings solche TIR-Optikkörper 1000 dahingehend an ihre Grenzen, dass nicht mehr alle Lichtquellen optimal in dem Lichteinkoppelbereich 1002 positioniert werden können, und dementsprechend die Qualität des Lichtbildes beeinträchtigt wird.

Außerdem sind solche TIR-(oder CPC-)Optikkörper 1000, wie in **Figur 1** gezeigt, hinsichtlich der Formgebung beschränkt und können häufig bei gewünschten Scheinwerferdesigns wegen ihres rotationssymmetrischen Aussehens nicht mehr zum Einsatz kommen.

Aus diesem Grund kommen sogenannte "extrudierte" TIR-Optikkörper 2000, wie in **Figur 2** dargestellt, zum Einsatz. Bei einem extrudierten TIR-Optikkörper 2000 handelt es sich dem Grunde nach um einen Körper, der wie folgt aufgebaut ist: bei einem Schnitt durch den Körper in einer X,Z-Ebene, welche Ebene die optische Achse X enthält (oder eine dazu parallele Gerade), weist die sich ergebende Schnittebene G durch den Körper eine definierte, vorgebbare Gestalt auf. Entlang einer Richtung Y, welche quer zu der optischen Achse X verläuft und vorzugsweise normal auf die Ebene aufgespannt von den Achsen X, Z steht, werden diese Schnittebenen nun aneinander gereiht, so dass sich ein entlang der Y-Achse "extrudierter" Körper 2000 wie in Figur 2 dargestellt ergibt. Anders formuliert ergeben sich bei Schnitten durch den Körper 2000 in Ebenen, die parallel zu der X,Z-Ebene, sind, idente Schnittebenen.

Der Begriff "extrudieren" bezieht sich in diesem Zusammenhang nicht auf die konkrete Herstellungsart, sondern lediglich darauf, wie der dreidimensionale Körper geometrisch beschrieben ist.

Beispielsweise stellt die X,Z-Ebene eine Vertikalebene dar, während die X,Y-Ebene eine Horizontalebene darstellt, die normal auf die X,Z-Ebene steht. Beide Ebenen enthalten jeweils die optische Achse X. Die Begriffe "horizontal" und "vertikal" beziehen sich dabei auf eine typische oder die normale Einbaulage der Beleuchtungsvorrichtung in einem Fahrzeug. Im Betrieb, d.h. insbesondere während einer Fahrt, kann natürlich die Beleuchtungsvorrichtung auch andere Lagen als einnehmen.

Die optische Achse ist eine Achse, die vorzugsweise in etwa in Richtung der Hauptausbreitungsrichtung des Lichts (sowohl in dem Optikkörper als auch im Außenraum nach dem Optikkörper oder im Verkehrsraum) verläuft. Typischerweise verläuft die optische Achse durch einen zentralen Punkt der Lichtaustrittsfläche, z.B. durch ein Symmetriezentrum der Lichtaustrittsfläche, und steht beispielsweise normal auf die Lichtaustrittsfläche in diesem Punkt.

Ein solcher extrudierte TIR-Optikkörper 2000 zeichnet sich dadurch aus, dass der Lichteinkoppelbereich 2002 zwei, in diesem Beispiel oben und unten liegende Begrenzungswände 2002a sowie eine der zumindest einen Lichtquelle 2001 gegenüberliegende "zentrale" Begrenzungswand 2002b aufweist, dass aber in Y-Richtung quer zu der optischen Achse X der Lichteinkoppelbereich 2002 (im Gegensatz zu dem rotationssymmetrischen und daher in Y-Richtung geschlossenen Lichteinkoppelbereich aus **Figur 1****)** offen ist, wie dies in **Figur 2** gut zu erkennen ist.

Auf Grund der längserstreckten Gestalt des extrudierten TIR-Optikkörper 2000 in Richtung Y können in dem Lichteinkoppelbereich 2002 auch zwei oder mehrere Lichtquellen, insbesondere LED's problemlos angeordnet werden und es lässt sich eine kompakte Bauform realisieren.

Nachteil dieser Form des TIR-Optikkörpers 2000 ist allerdings die mangelnde Homogenität des über die Lichtaustrittsfläche 2003 ausgestrahlten Lichtes, unabhängig davon, ob sich in dem Lichteinkoppelbereich 2002 ein oder mehrere Lichtquellen 2001 befinden.

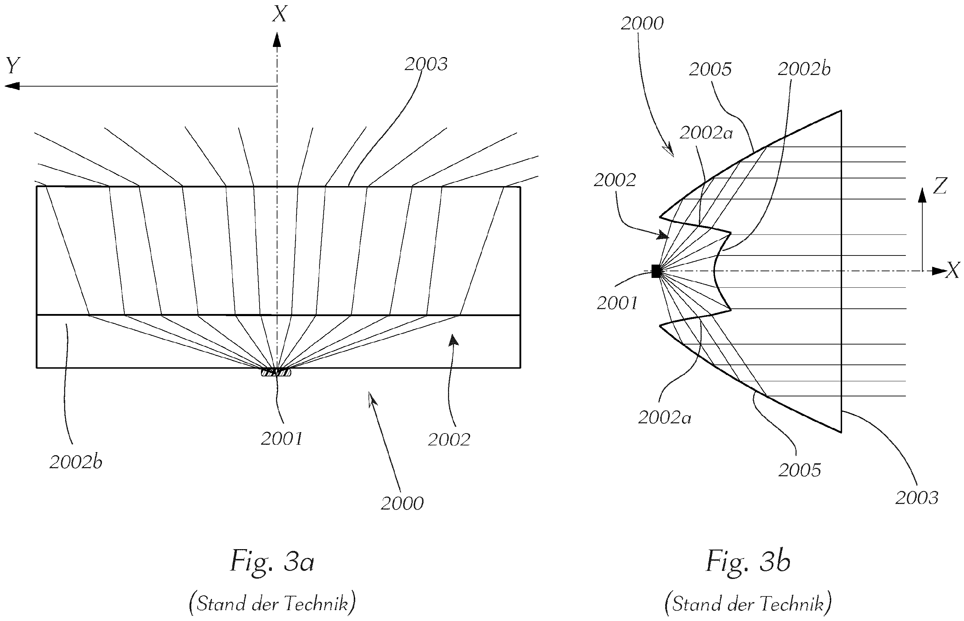

Dies ist im Folgenden an Hand der **Figuren 3a und 3b** näher dargestellt, an Hand eines Beispiels mit einer LED als Lichtquelle 2001. Betrachtet man vorerst z.B. einen Vertikalschnitt in der X,Z-Ebene (selbiges gilt auch für dazu parallele Vertikalebenen), siehe **Figur 3b****,** so fangen die obere und untere Begrenzungsfläche 2002a das nach oben und unten austretende Licht der LED 2001 auf und lenken es auf obere und untere Seitenwände 2005 des Optikkörpers 2000, wo dieses totalreflektiert wird und zu der Lichtaustrittsfläche 2003 umgelenkt wird. Nach Vorne abgestrahltes Licht der LED 2001 tritt über die Begrenzungsfläche 2002b in den TIR-Optikkörper 2000 ein, wobei dieses entsprechend (nach dem Brechungsgesetz von Snellius) abgelenkt wird und sich durch den Optikkörper zu der Lichtaustrittsfläche 2003 fortpflanzt. Durch geeignete Auslegung der Flächen 2002a, 2002b und der Form des TIR-Optikkörpers 2000 kann in bekannter Weise erreicht werden, dass in vertikaler Richtung die Lichtstrahlen parallel zueinander und vorzugsweise parallel zu der optischen Achse X aus dem Optikkörper 2000 austreten.

In horizontaler Richtung tritt allerdings die in **Figur 3a** gezeigte Situation auf: in horizontalen Schnitten, beispielsweise in dem gezeigten horizontalen Schnitt X-Y, welcher die optische Achse X enthält, werden Lichtstrahlen (d.h. die Projektionen der Lichtstrahlen in diesen horizontalen Schnitt) der LED 2001, je weiter seitlich der LED 2001 sie auf die zentrale Begrenzungsfläche 2002b auftreffen, bei ihrem Eintritt in den TIR-Optikkörper 2000 umso stärker von der optischen Achse X weg gebrochen. Lediglich zentrale Lichtstrahlen der LED 2001, die in etwa normal auf die zentrale Begrenzungsfläche 2002b auftreffen, treten in etwa parallel zu der optischen Achse X in den TIR-Optikkörper 2000 ein. Bei dem Austritt aus dem Optikkörper 2000 über die Lichtaustrittsfläche 2003 werden in horizontaler Richtung (d.h. in der Projektion in die gezeigte horizontale Ebene) die Lichtstrahlen noch einmal nach Außen, von der optischen Achse X weg gebrochen.

Dieses Verhalten ergibt sich insbesondere dadurch, dass in Y-Richtung keine Seitenwände existieren, die das stark seitlich abgestrahlte Licht der LED 2001 einfangen und entsprechend umlenken könnten. Im Resultat erzeugt die Beleuchtungsvorrichtung aus **Figur 2** eine inhomogene Lichtverteilung.

Dokument US 2007/0064431 A1 zeigt einen Optikkörper, bei dem eine glatte zentrale Lichteintrittsfläche von seitlichen Flächen, welche eine Fresnelstruktur aufweisen, begrenzt wird. Licht aus der Lichtquelle kann über die Fresnelstruktur in den Optikkörper eintreten und wird unmittelbar von der Fresnelstruktur parallel in Richtung einer Lichtaustrittsfläche gerichtet.

Es ist eine Aufgabe der Erfindung, eine Lösung für dieses Problem anzugeben.

Diese Aufgabe wird durch die Merkmale des Anspruchs 1 gelöst, wobei erfindungsgemäß die zentrale Lichteinkoppelfläche eine, vorzugsweise glatte, Basisfläche umfasst, auf welcher eine optische Struktur angeordnet ist, welche derart ausgebildet ist, dass Lichtstrahlen bei ihrem Eintritt in den TIR-Optikkörper über die zentrale Lichteinkoppelfläche an dieser, betrachtet in einer Projektion in eine Ebene, welche von der optischen Achse und der ersten Richtung aufgespannt wird oder zu dieser Ebene parallel ist, derart abgelenkt werden, dass sich diese Lichtstrahlen im TIR-Optikkörper, betrachtet in dieser Projektion, parallel zueinander fortpflanzen.

Durch die erfindungsgemäße Ausgestaltung der zentralen Lichteinkoppelfläche wird Licht auch dann, wenn es in der ersten Richtung gesehen außerhalb, insbesondere auch weit außerhalb der optischen Achse auf die zentrale Lichteinkoppelfläche auftrifft, wie oben beschrieben parallel gerichtet und vorzugsweise auch parallel zu der optischen Achse (zumindest gesehen in der Projektion A) gerichtet, sodass sich diese Lichtstrahlen zumindest in der Projektion A als paralleles Strahlenbündel in dem Optikkörper fortpflanzen. Generell wird mit der Erfindung eine Parallelrichtung des Lichtes in die Hauptabstrahlrichtung auch für mehrere Lichtquellen, insbesondere LEDs erreicht, ohne auf einen "Brennpunkt" festgelegt zu sein.

Weitere vorteilhafte Ausgestaltungen, die für sich allein genommen oder in beliebiger Kombination realisiert sein können, sind im Folgenden beschrieben:
Vorzugsweise ist vorgesehen, dass sich die über die zentrale Lichteinkoppelfläche eintretenden Lichtstrahlen in der Projektion in Richtungen parallel zu der optischen Achse fortpflanzen.

Bei zwei oder mehreren Lichtquellen sind diese vorzugsweise auf einer Linie angeordnet.

Beispielsweise sind bei zwei oder mehr Lichtquellen diese in einer dritten Richtung verlaufend angeordnet, insbesondere verläuft die Linie, auf welcher die Lichtquellen angeordnet sind, in eine dritte Richtung, wobei vorzugsweise die dritte Richtung parallel zu der ersten Richtung verläuft. Dadurch sind diese zwei oder mehr Lichtquellen einfach auf einem einzigen Montageelement, beispielsweise einer PCB-Platine, positionierbar.

Vorzugsweise verlaufen die optische Achse, die erste Richtung und die zweite Richtung jeweils orthogonal zueinander.

Es kann vorgesehen sein, dass die zumindest eine Lichtquelle, vorzugsweise alle Lichtquellen als LED's ausgebildet sind, wobei vorzugsweise eine lichtemittierende Fläche der zumindest einen LED, insbesondere jeder LED, der zentralen Lichteinkoppelfläche zugewandt sind. Insbesondere ist dabei die Normale auf die (ebene) Lichtaustrittsfläche einer LED bzw. der LED's parallel zu der optischen Achse X des TIR-Optikkörpers.

Es kann vorgesehen sein, dass die optische Struktur Erhebungen umfasst oder aus solchen Erhebungen besteht, welche Erhebungen auf der Basisfläche angeordnet sind, und/oder Vertiefungen umfasst oder aus solchen Vertiefungen gebildet ist, welche in der Basisfläche ausgebildet sind.

Insbesondere ist es von Vorteil, wenn in Schnitten durch den TIR-Optikkörper im Bereich der zentralen Lichteinkoppelfläche, welche Schnitte sich durch Schneiden mit Ebenen, welche von der optischen Achse und der ersten Richtung aufgespannt sind bzw. zu dieser parallel verlaufen, die Erhebungen bzw. Vertiefungen dreieckförmig ausgebildet sind.

Mit den sich im dreidimensionalen entsprechend ergebenden prismatischen Strukturen kann eine gezielte Beeinflussung, insbesondere Ablenkung der Lichtstrahlen beim Eintritt in den Optikkörper über die zentrale Lichteinkoppelfläche erfolgen.

Vorzugsweise ist vorgesehen, dass ausgehend jeweils von einem zentralen Punkt, wo der maximale Abstand einer Erhebung bzw. Vertiefung zu der Basisfläche minimal oder Null ist, nach Außen hin, entlang der ersten Richtung, der maximale Abstand, den jede Erhebungen bzw. Vertiefungen zu der Basisfläche aufweist, zunimmt.

Der maximale Abstand jeder einzelnen Erhebung (oder Vertiefung) von der Basisfläche, d.h. z.B. die "Höhe" der Erhebung/Vertiefung, kann sich entsprechend bei einem Fortschreiten nach Außen ändern, insbesondere wird dieser vorzugsweise größer, sodass weiter Außen auf die zentrale Lichteinkoppelfläche auftreffende Strahlen, die schräger auftreffen als zentralere Strahlen, stärker abgelenkt werden. Die Zunahme kann dabei kontinuierlich erfolgen, beispielsweise linear.

Weiters kann mit Vorteil vorgesehen sein, dass ausgehend jeweils von einem zentralen Punkt oder einer Zentralebene nach Außen hin, zu beiden Seiten, in der Projektion die Erhebungen bzw. Vertiefungen spiegelsymmetrisch zueinander ausgebildet sind.

Die sogenannte "Zentralebene" ist beispielsweise eine Vertikalebene (parallel zur X,Z-Ebene; insbesondere kann es sich bei der Zentralebene um die X,Z-Ebene handeln) durch den Optikkörper, welche die optische Achse enthält. Somit enthält diese Zentralebene oder Längsmittelebene alle oben erwähnten "zentralen" Punkte, welche auf der Basisfläche der zentralen Lichteinkoppelfläche liegen.

Vorzugsweise ist die die Basisfläche nach Außen, d.h. in Richtung der zumindest einen Lichtquelle, gewölbt ist, z.B. in Form eines Teil-Zylindermantels, wobei vorzugsweise die Höhe des Teil-Zylinders parallel zu der ersten Richtung verläuft.

Auf diese Weise kann erreicht werden, dass in der zweiten Richtung - d.h. beispielsweise in vertikaler Richtung - die über die zentrale Lichteinkoppelfläche eintretenden Lichtstrahlen beim Eintritt in der Optikkörper parallel gerichtet werden. Vorzugsweise erfolgt die Auslegung der Basisfläche derart, dass die in vertikaler Richtung parallelen Lichtstrahlen außerdem parallel zu der optischen Achse verlaufen.

Zur Klarstellung wird an dieser Stelle noch das Folgende angemerkt: eingangs wurde bereits von der sogenannten "Einbaulage" gesprochen. In einem, vorzugsweise orthogonalen, Koordinatensystem, wie es in dem vorliegenden Text verwendet wird, verläuft die Achse X (auch X-Achse), auch optische Achse X genannt, horizontal im Wesentlichen bzw. in etwa in Hauptabstrahlrichtung oder Vorwärtsrichtung. Die Achse Y (auch Y-Achse) verläuft quer dazu ebenfalls horizontal, während die Achse Z (auch Z-Achse) quer zu diesen beiden Achsen und vertikal verläuft. Lichtstrahlen, die sich fortpflanzen, können jeweils durch einen Vektor beschrieben werden, welcher eine X-, Y- und Z-Komponente aufweist. (Bei Durchtritt durch eine Grenzfläche ändern sich typischerweise eine oder mehrere dieser Komponenten eines den Lichtstrahl beschreibenden Vektors.)

Wenn nun die Rede davon ist, wie sich Lichtstrahlen in "vertikaler" Richtung zueinander verhalten, beispielsweise dass Lichtstrahlen in vertikaler Richtung zueinander parallel verlaufen, dann ist damit gemeint, dass die Projektionen dieser Lichtstrahlen in eine vertikalen Ebene, insbesondere in die X,Z-Ebene parallel zueinander verlaufen. Über die horizontale Komponente Y wird hier keine Aussage getroffen. Entsprechend bedeutet eine Formulierung, dass "in vertikaler Richtung parallele Lichtstrahlen zu der (optischen) Achse X parallel sind", dass die zueinander parallelen Projektionen der Lichtstrahlen in die Vertikalebene bzw. in die X,Z-Ebene parallel zu der (optischen) Achse X sind. Die Y-Komponente der Lichtstrahlen (nicht der Projektion!) kann, muss aber nicht Null sein.

Analoges gilt für die Aussage in "horizontaler Richtung": wenn die Rede davon ist, wie sich Lichtstrahlen in "horizontaler" Richtung zueinander verhalten, beispielsweise dass Lichtstrahlen in horizontaler Richtung zueinander parallel verlaufen, dann ist damit gemeint, dass die Projektionen dieser Lichtstrahlen in eine horizontale Ebene, insbesondere in die X,Y-Ebene parallel zueinander verlaufen. Über die vertikale Komponente Z wird hier keine Aussage getroffen. Entsprechend bedeutet eine Formulierung, dass "in horizontaler Richtung parallele Lichtstrahlen zu der (optischen) Achse X parallel sind", dass die zueinander parallelen Projektionen der Lichtstrahlen in die Horizontalebene bzw. in die X,Y-Ebene parallel zu der X-Achse sind. Die Z-Komponente der Lichtstrahlen (nicht der Projektion!) kann, muss aber nicht Null sein.

Insbesondere kann vorgesehen sein, dass der Lichteinkoppelbereich in der ersten Richtung offen, vorzugsweise auf beiden Seiten offen ausgebildet ist.

Auf Grund der Ausgestaltung der zentralen Lichteinkoppelfläche können diese Seitenbegrenzungsflächen des Lichteinkoppelbereiches weglassen werden, ohne dass dies negative Konsequenzen für die Homogenität des aus dem TIR-Optikkörper austretenden Lichtbündels oder die Effizienz der Beleuchtungsvorrichtung hätte.

Durch die Ausgestaltung der zentralen Fläche mit einer optischen Struktur wird die gleiche räumliche Umschließung erreicht wie durch Seitenflächen, sodass diese nicht notwendig sind.

Es kann vorgesehen sein, dass die Begrenzungsflächen eben ausgebildet sind und/oder dass die Begrenzungsflächen zueinander parallel verlaufen.

Es kann auch vorgesehen sein, dass die Lichtaustrittsfläche gekrümmt, z.B. nach Außen gekrümmt und insbesondere als Sammellinse wirkend, ausgebildet ist.

Entsprechend kann das aus der Beleuchtungsvorrichtung austretende Licht im Wesentlichen in einen Brennpunkt bzw. eine Brennebene gebündelt werden, wo es wie weiter unten noch beschrieben z.B. zur Erzeugung einer Abblendlichtverteilung, einer Vorfeldverteilung oder einer Abblendlichtverteilung oder eines Teiles einer solcher Lichtverteilung verwendet werden kann.

Bei dem TIR-Optikkörper ist vorgesehen, dass zumindest eine der oder die Seiten-Lichteinkoppelflächen des Lichteinkoppelbereiches derart mit oberen und/oder unteren Begrenzungsflächen des TIR-Optikkörpers abgestimmt sind, dass an der oberen und/oder unteren Begrenzungsfläche des TIR-Optikkörpers total-reflektierte Lichtstrahlen, betrachtet in vertikalen Schnitten durch den TIR-Optikkörper, sich parallel zueinander und vorzugsweise parallel zu der optischen Achse des TIR-Optikkörpers fortpflanzen.

Es kann vorgesehen sein, dass zumindest einer der oder die Seiten-Lichteinkoppelflächen jeweils eine optische Struktur, z.B. eine fresnelartige Struktur, beispielsweise zum horizontalen Parallelrichten, d.h. zum Parallelrichten der Projektionen von Lichtstrahlen in eine Ebene parallel zu der Ebene bzw. in die Ebene, aufweisen.

Beispielsweise dient die Beleuchtungsvorrichtung zum Erzeugen einer Fernlichtverteilung, einer Abblendlichtverteilung, einer Nebellichtverteilung, einer Vorfeldlichtverteilung, einer Nebellichtverteilung, einer Lichtverteilung einer Signallichtfunktion, z.B. eines Tagfahrlichtes, eines Fahrtrichtungsanzeiger oder einer Bremsleuchte, oder eines Teiles einer der genannten Lichtverteilungen.

Es kann vorgesehen sein, dass das aus dem TIR-Optikkörper austretende Licht direkt, d.h. ohne Beeinflussung durch weitere optische Vorrichtungen, oder nach Durchtritt durch eine optische Vorrichtung, z.B. eine Projektionsoptikvorrichtung etwa in Form einer Projektionslinse, in Form einer Lichtverteilung oder Teillichtverteilung abgebildet wird.

Beispielsweise kann es z.B. im Zusammenhang mit der Erzeugung einer abgeblendeten Lichtverteilung, z.B. einer Abblendlichtverteilung, Vorfeldlichtverteilung, Nebellichtverteilung oder eines Teiles einer solchen Lichtvorteilung, vorgesehen sein, dass die Beleuchtungsvorrichtung derart ausgebildet ist, dass sie Licht im Wesentlichen in einen Brennpunkt bzw. eine Brennebene bündelt, und wobei eine Projektionsoptikvorrichtung, z.B. eine Projektionslinse in Lichtausbreitungsrichtung nach der Beleuchtungsvorrichtung vorgesehen ist, welche das aus der Beleuchtungsvorrichtung kommende Licht als entsprechende Lichtverteilung abbildet. Ein Brennpunkt der Projektionsoptikvorrichtung befindet sich dabei vorzugsweise in der Brennebene bzw. im Brennpunkt, in welchen die Beleuchtungsvorrichtung das Licht bündelt

Beispielsweise kann die Beleuchtungsvorrichtung als Kraftfahrzeugscheinwerfer oder Heckleuchte eines Kraftfahrzeuges oder Signalleuchte für ein Kraftfahrzeug ausgebildet ist.

Weiters betrifft die Erfindung eine Vorrichtung umfassend ein oder mehrere der oben beschriebenen Beleuchtungsvorrichtungen, wobei die Vorrichtung ein Kraftfahrzeugscheinwerfer oder eine Heckleuchte für ein Kraftfahrzeug oder eine Signalleuchte für ein Kraftfahrzeug ist, du wobei im Fall von mehreren Beleuchtungsvorrichtungen vorzugsweise alle Beleuchtungsvorrichtungen identisch sind.

Insbesondere kann vorgesehen sein, dass zwei oder mehr Beleuchtungsvorrichtungen vorgesehen sind, wobei diese vorzugsweise unmittelbar nebeneinander, insbesondere aneinander angrenzend, angeordnet sind, vorzugsweise derart, dass die Lichtquellen der verschiedenen Beleuchtungsvorrichtungen auf einer Linie liegen.

Vorzugsweise liegen diese dabei derart nebeneinander, dass die Seitenbegrenzungsflächen der TIR-Optikkörper nebeneinander liegen bzw. aneinander anliegen; die Optikkörper können auch einstückig miteinander ausgebildet sein und bilden in diesem Fall ein Optikkörpersystem.

Beispielsweise kann die Vorrichtung zum Erzeugen einer Fernlichtverteilung, einer Abblendlichtverteilung, einer Nebellichtverteilung, einer Vorfeldlichtverteilung, einer Nebellichtverteilung, einer Lichtverteilung einer Signallichtfunktion, z.B. eines Tagfahrlichtes, eines Fahrtrichtungsanzeiger oder einer Bremsleuchte, oder eines Teiles einer der genannten Lichtverteilungen vorgesehen sein.

Im Folgenden ist die Erfindung an Hand der Zeichnung näher erörtert. In dieser zeigt
Fig. 1 eine Beleuchtungsvorrichtung gemäß dem Stand der Technik mit einem TIR-Optikkörper, welcher um eine optische Achse rotationssymmetrisch ausgestaltet ist,
Fig. 2 eine Beleuchtungsvorrichtung gemäß dem Stand der Technik mit einem sogenannten "extrudierten" TIR-Optikkörper in einer perspektivischen Ansicht,
Fig. 3a einen Horizontalschnitt entlang der optischen Achse durch den TIR-Optikkörper aus **Figur 2** und den Strahlengang von Lichtstrahlen in einer Projektion in die sich ergebende Schnittebene A-A,
Fig. 3b einen Vertikalschnitt entlang der optischen Achse durch den TIR-Optikkörper aus **Figur 2** und den Strahlengang von Lichtstrahlen in einer Projektion in die sich ergebende Schnittebene,
Fig. 4 eine perspektivische Ansicht einer erfindungsgemäßen Beleuchtungsvorrichtung mit einem erfindungsgemäßen TIR-Optikkörper,
Fig. 5a einen Horizontalschnitt entlang der optischen Achse durch den TIR-Optikkörper aus **Figur 4** und den Strahlengang von Lichtstrahlen in einer Projektion in die sich ergebende Schnittebene A-A,
Fig. 5b einen Vertikalschnitt entlang der optischen Achse durch den TIR-Optikkörper aus **Figur 4** und den Strahlengang von Lichtstrahlen in einer Projektion in die sich ergebende Schnittebene,
Fig. 6 eine Detailansicht eines Teiles des TIR-Optikkörpers aus **Figur 4** in einem Schnitt gemäß **Figur 5a****,**
Fig. 7 eine perspektivische Ansicht einer weiteren erfindungsgemäßen Beleuchtungsvorrichtung mit einem erfindungsgemäßen TIR-Optikkörper,
Fig. 8a einen Horizontalschnitt entlang der optischen Achse durch den TIR-Optikkörper aus **Figur 7** und den Strahlengang von Lichtstrahlen in einer Projektion in die sich ergebende Schnittebene A-A,
Fig. 8b einen Vertikalschnitt entlang der optischen Achse durch den TIR-Optikkörper aus **Figur 7** und den Strahlengang von Lichtstrahlen in einer Projektion in die sich ergebende Schnittebene, und
Fig. 9 eine Anordnung von drei nebeneinander liegenden erfindungsgemäßen Beleuchtungsvorrichtungen, wie sie z.B. in **Figur 4** oder **Figur 7** gezeigt sind, z.B. in einem Kraftfahrzeugscheinwerfer oder in einer Heckleuchte eines Kraftfahrzeuges.

Im Folgenden wird die Erfindung näher erörtert, wobei auf die in der vorstehend an Hand der Beschreibung des Standes der Technik festgelegten Begriffe und Definitionen zurückgegriffen wird.

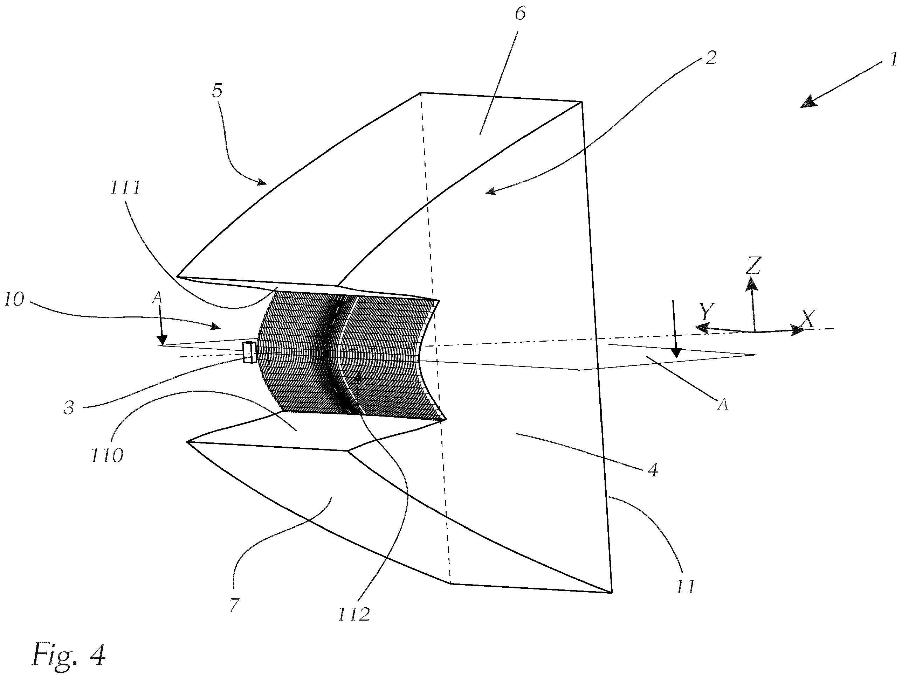

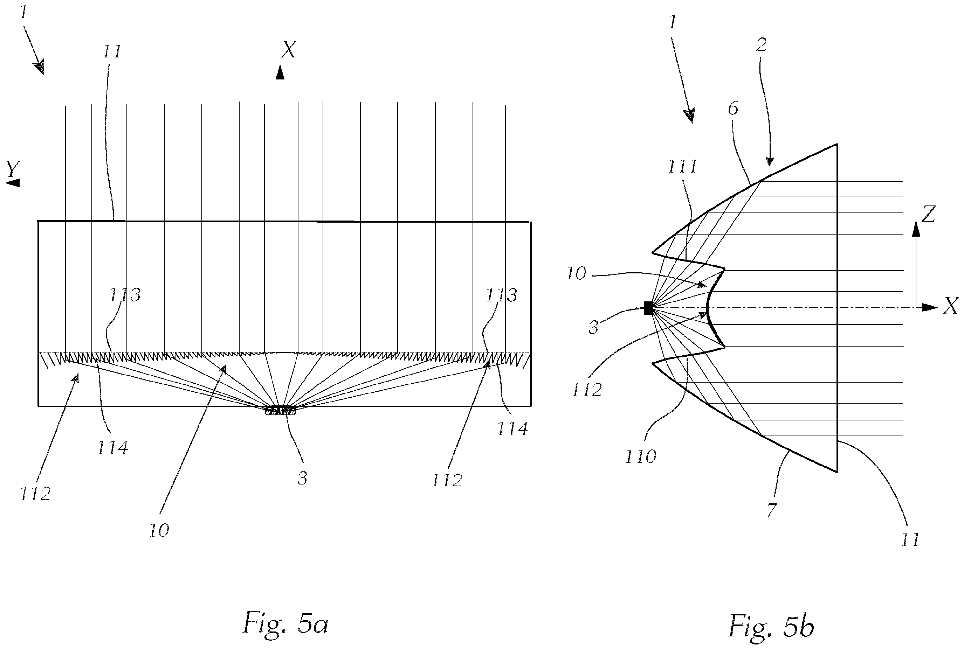

Eine Lösung der eingangs beschriebenen Problemstellung bietet eine Beleuchtungsvorrichtung 1, wie sie in den **Figuren 4****,** **5a und 5b** dargestellt ist.

Die Beleuchtungsvorrichtung 1umfasst einen TIR-Optikkörper 2, insbesondere einen sogenannten extrudierten TIR-Optikkörper, ähnlich dem an Hand von **Figur 2** erläuterten TIR-Optikkörper 2000, sowie eine LED-Lichtquelle 3.

Der TIR-Optikkörper 2 gemäß **Figur 4** weist einen Lichteinkoppelbereich 10 und eine Lichtaustrittsfläche 11 auf, wobei Licht der Lichtquellen 3, welches über den Lichteinkoppelbereich 10 in den TIR-Optikkörper 2 eingespeist wird, zumindest teilweise über die Lichtaustrittsfläche 11 austritt und entweder direkt oder nach Durchtritt einer weiteren, nicht dargestellten Abbildungsvorrichtung, z.B. einer Projektionsoptikvorrichtung (z.B. einer Projektionslinse) als Lichtverteilung oder Teil einer Lichtverteilung abgebildet wird.

In einer ersten Richtung Y wird der TIR-Optikkörper 2 von zwei einander gegenüberliegenden Begrenzungsflächen 4, 5 begrenzt. Vorzugsweise sind diese beiden Begrenzungsflächen 4, 5 eben ausgebildet und verlaufen parallel zueinander.

Außerdem weist der TIR-Optikkörper 2 eine obere Begrenzungsfläche 6 und eine untere Begrenzungsfläche 7 auf, welche die beiden seitlichen Begrenzungsflächen 4, 5 miteinander verbinden, und welche mit dem Lichteinkoppelbereich 10, insbesondere den beiden Seiten-Lichteinkoppelflächen 110, 111 des Lichteinkoppelbereiches 10 verbunden sind.

Im TIR-Optikkörper 2 sich fortpflanzendes Licht, welches auf die Begrenzungsflächen 4, 5, 6, 7 trifft, wird an diesen vorzugsweise in Richtung der Lichtaustrittsfläche 11 totalreflektiert.

Vorzugsweise sind die Seiten-Lichteinkoppelflächen 110, 111 des Lichteinkoppelbereiches 10 derart mit der oberen und unteren Begrenzungsfläche 6, 7 des TIR-Optikkörpers 2 abgestimmt, dass sich an der oberen und unteren Begrenzungsfläche 6, 7 total-reflektierte Lichtstrahlen, betrachtet in vertikalen Schnitten durch den TIR-Optikkörper 2, parallel zueinander und vorzugsweise parallel zu der optischen Achse X des TIR-Optikkörpers 2 fortpflanzen.

Beispielsweise ist die optische Achse X eine Achse, die vorzugsweise in etwa in Richtung der Hauptausbreitungsrichtung des Lichts (sowohl in dem Optikkörper als auch im Außenraum nach dem Optikkörper oder im Verkehrsraum) verläuft. Typischerweise verläuft die optische Achse durch einen zentralen Punkt der Lichtaustrittsfläche 11, z.B. durch ein Symmetriezentrum der Lichtaustrittsfläche 11, und steht beispielsweise normal auf die Lichtaustrittsfläche 11 in diesem Punkt.

Die erste Richtung verläuft quer zu der optischen Achse X des TIR-Optikkörpers 2, vorzugsweise orthogonal zu der optischen Achse X.

Der Lichteinkoppelbereich 10 weist in einer zweiten Richtung Z, welche quer zu der optischen Achse X des TIR-Optikkörpers 2 sowie quer zu der ersten Richtung Y verläuft, Seiten-Einkoppelflächen 110, 111 aufweist. Vorzugsweise verläuft die zweite Richtung Z orthogonal zu den beiden anderen Richtungen Y, Z. In der ersten Richtung Y ist der Lichteinkoppelbereich 10 offen, vorzugsweise wie dargestellt auf beiden Seiten offen ausgebildet.

Außerdem weist der Lichteinkoppelbereich 10 eine zentrale Lichteinkoppelfläche 112 auf, welche an die beiden Seiten-Einkoppelflächen 110, 111 angrenzt bzw. an diese anstößt, wie dies in den Figuren dargestellt ist.

Licht der Lichtquelle 3 wird über die zentrale Lichteinkoppelfläche 112 sowie über die beiden Seiten-Einkoppelflächen 110, 111 eingespeist und pflanzt sich in dem TIR-Optikkörper 2 fort.

Erfindungsgemäß, wie dies in **Figur 4** sowie den **Figuren 5a, 5b** schematisch zu erkennen ist, weist die zentrale Lichteinkoppelfläche 112 eine, vorzugsweise glatte, Basisfläche 113 auf, auf welcher eine optische Struktur 114 angeordnet ist, welche derart ausgebildet ist, dass Lichtstrahlen bei ihrem Eintritt in den TIR-Optikkörper 2 über die zentrale Lichteinkoppelfläche 112 an dieser, betrachtet in einer Projektion in eine Ebene A, welche von der optischen Achse X und der ersten Richtung Y aufgespannt wird oder zu dieser Ebene parallel ist, derart abgelenkt werden, dass sich diese Lichtstrahlen im TIR-Optikkörper 2, betrachtet in dieser Projektion, parallel zueinander fortpflanzen.

Besonders bevorzugt ist, wenn wie dargestellt die Projektion der Lichtstrahlen in diese Ebene A auch parallele zur optischen Achse X verlaufen, wie dies in **Figur 5a** gezeigt ist.

Im Vergleich zu einer Ausgestaltung gemäß dem Stand der Technik, wie in **Figur 3a** gezeigt, werden erfindungsgemäß Lichtstrahlen, die über die zentrale Lichteinkoppelfläche 112 in den TIR-Optikkörper 2 eintreten, gegenüber dem Stand der Technik derart beeinflusst, dass sie (gegenüber dem Stand der Technik) horizontal derart abgelenkt werden, sodass in der Projektion in die Ebene A parallel zueinander verlaufen.

Ein Vergleich der **Figur 5b****,** welche die erfindungsgemäße Ausgestaltung zeigt, mit jener gemäß **Figur 3b** zeigt weiters, dass in Z-Richtung, d.h. in vertikaler Richtung, die Lichtstrahlen nicht beeinflusst werden und sich unverändert in einer Projektion in die vertikale Schnittebenen, welche die optische Achse X enthält, parallel zueinander und vorzugsweise parallel zu der optischen Achse X fortpflanzen.

Die Basisfläche 112 weist vorzugsweise wie in **Figur 4** **und** **5b** zu erkennen eine nach Außen, d.h. in Richtung der Lichtquelle 3 gewölbte Form auf. Beispielsweise ist die Basisfläche 112 in Form eines Teil-Zylindermantels ausgebildet, wobei vorzugsweise die Höhe des Teil-Zylinders parallel zu der ersten Richtung Y verläuft.

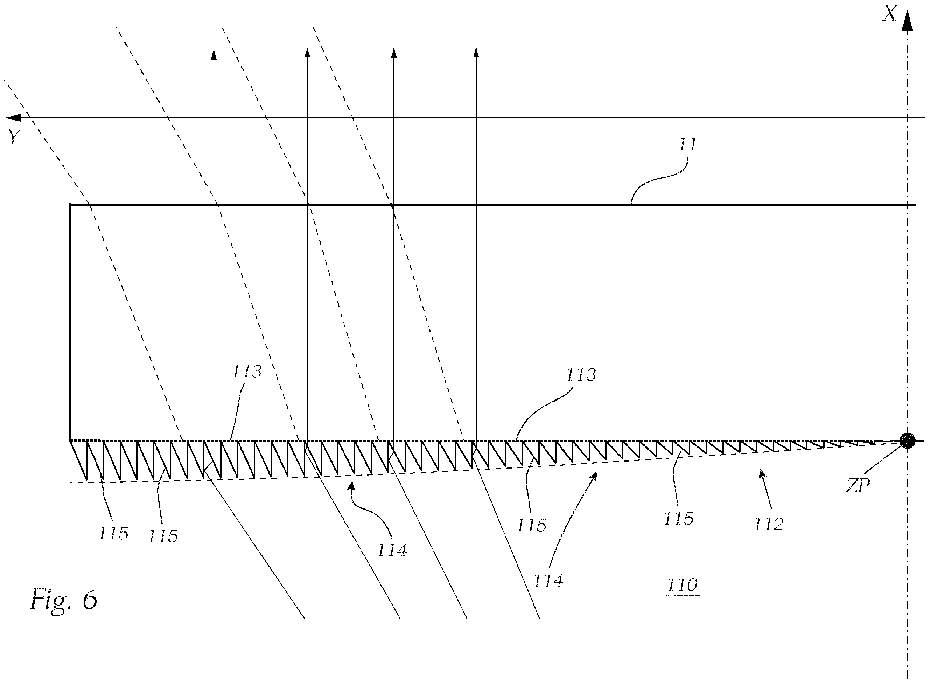

**Figur** 6 zeigt eine Detailansicht der optischen Struktur in einem Bereich links der optischen Achse X in dem Schnitt A, d.h. in der Horizontalschnittebene A, welche die optische Achse enthält. In darüber und darunter liegenden Schnitten ist die Situation qualitativ vergleichbar.

Wie zu erkennen, besteht die optische Struktur 113 aus Erhebungen 115, welche auf der Basisfläche 113 angeordnet sind. In dem gezeigten Schnitt sind beispielsweise die Erhebungen 115 dreieckförmig ausgebildet, sodass sich im Dreidimensionalen prismenartige Erhebungen ergeben. Eine beispielhaft gezeigte Ausführungsform der Erhebungen zeigt eine sägezahnartige Ausgestaltung mit einer parallel zur gewünschten Austrittsrichtung orientierten Vertikalfläche, an der die von der Lichtquelle emittierten Lichtstrahlen zu den schräg dazu verlaufenden Querflächen totalreflektiert werden und an dieser Querflächen in den Optikkörper eintreten und zur gewünschten Austrittsrichtung hin gebrochen werden.

Betrachtet in einem jeweiligen Schnitt, z.B. in dem Schnitt A wie gezeigt, nimmt ausgehend jeweils von einem zentralen Punkt ZP, wo der maximale Abstand der Erhebung 115 zu der Basisfläche 113 minimal oder Null ist, nach Außen hin, entlang (und entgegen) der ersten Richtung Y, der maximale Abstand, den jede Erhebungen 115 bzw. Vertiefungen zu der Basisfläche 112 aufweist, zu. Je weiter Außen (in Bezug auf die optische gesehen) Lichtstrahlen auf die zentrale Lichteinkoppelfläche 112 auftreffen, umso schräger treffen sie auf, d.h. umso größer ist der Winkel, unter dem sie zur optischen Achse X verlaufen. Die strichlierten Strahlen zeigen den Zusammenhang im Fall einer glatten Basisfläche, wie sie aus dem Stand der Technik bekannt ist, die bei einem extrudierten TIR-Optikkörper dazu führt, dass Lichtstrahlen in horizontaler Richtung im stärker nach Außen abgelenkt werden, sodass sich eine inhomogene Lichtverteilung oder ein inhomogenes Lichtbild ergibt.

Mit der Erfindung wird ein durchgezogen dargestellter Verlauf der Lichtstrahlen im TIR-Optikkörper erreicht, d.h. durch die optische Struktur 114 werden bei dem Eintritt in den TIR-Optikkörper 2 die Lichtstrahlen, insbesondere alle Lichtstrahlen, horizontal derart abgelenkt, dass sie sich in horizontaler Richtung gesehen parallel zueinander fortpflanzen und sich vorzugsweise auch parallel zu der optischen Achse X fortpflanzen.

**Figur 6** zeigt lediglich den linken Teil der Lichteinkoppelfläche 112. Vorzugsweise ist vorgesehen, dass ausgehend von dem zentralen Punkt ZP oder ausgehend von der Vertikalebene, welche die optische Achse enthält (X,Z-Ebene) nach Außen hin, zu beiden Seiten, die Erhebungen 115 spiegelsymmetrisch zueinander ausgebildet sind.

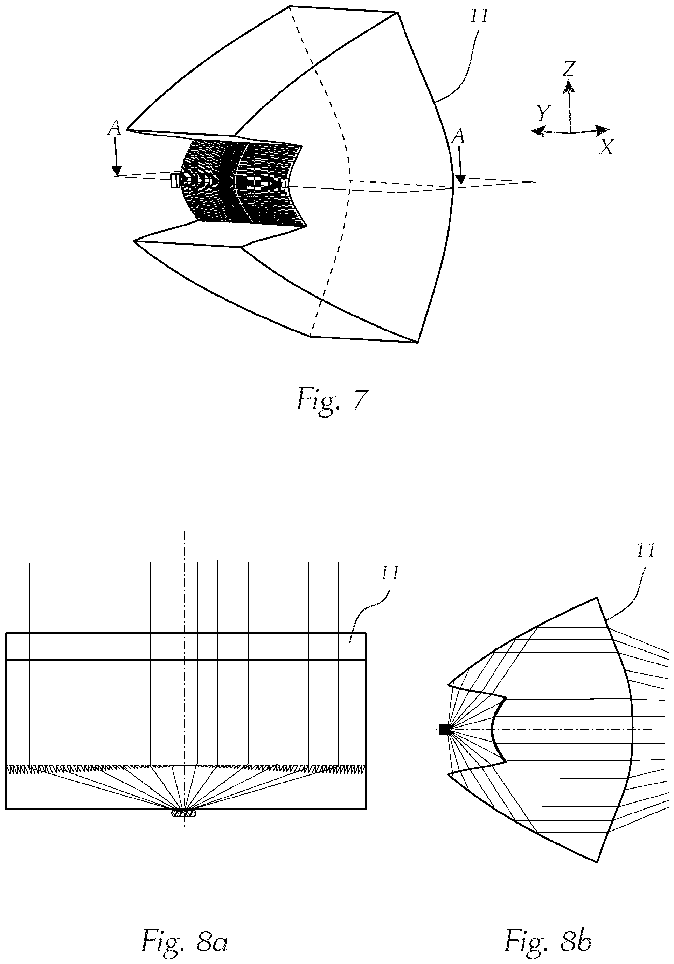

Die **Figuren 7** und **8a****, 8b** zeigen eine Abwandlung der oben beschriebenen Beleuchtungsvorrichtung. Der Aufbau ist grundsätzlich identisch zu der Beleuchtungsvorrichtung aus **Figur 4****,** weshalb hier lediglich auf den Unterschied eingegangen wird.

Bei der Ausgestaltung der Belichtungsvorrichtung gemäß **Figur 4** ist die Lichtaustrittsfläche 11 vorzugsweise eben ausgebildet ist und steht vorzugsweise normal auf die optische Achse X, sodass Lichtstrahlen, die sich parallel zu der X-Achse fortpflanzen, ohne Ablenkung aus dem Optikkörper 2 austreten können. Das austretende homogene Lichtbündel kann beispielsweise gleich direkt, ohne weitere Beeinflussung durch eine weitere optische als Lichtverteilung abgebildet werden.

Wie in **Figur 7** und insbesondere **8b** gut zu erkennen ist, ist im Gegensatz zu **Figur 4** die Lichtaustrittsfläche 11 gekrümmt, insbesondere nach Außen gekrümmt ausgebildet. Vorzugsweise ist die Lichtaustrittsfläche 11 bezüglich der X,Y-Ebene symmetrisch ausgebildet.

Bei dieser Ausgestaltung werden die sich im TIR-Optikkörper 2 parallel zur optischen Achse X fortpflanzenden Lichtstrahlen im Wesentlichen in einem Brennpunkt bzw. einer Brennebene (beide nicht dargestellt) gebündelt, d.h. (in Folge der realen Ausdehnung der Lichtquelle(n)) entsteht dort ein Zwischenlichtbild, welches von einer nachgeschalteten Projektionsoptikvorrichtung, z.B. einer Projektionslinse, als Lichtverteilung oder Teil davon abgebildet werden kann. Diese Projektionsoptikvorrichtung ist vorzugsweise derart angeordnet, dass sich ein Fokuspunkt oder eine Fokallinie der Projektionsoptikvorrichtung in der Brennebene bzw. in dem Brennpunkt der Beleuchtungsvorrichtung befindet. Um z.B. eine Hell-Dunkel-Grenze erzeugen zu können, kann die Projektionsoptikvorrichtung beispielsweise noch ein oder mehrere dafür geeignete Elemente, z.B. eine Blendenvorrichtung oder eine Blende umfassen, welche einen Teil der Lichtstrahlen aus dem Lichtbündel, welches aus der Beleuchtungsvorrichtung austritt, abschattet.

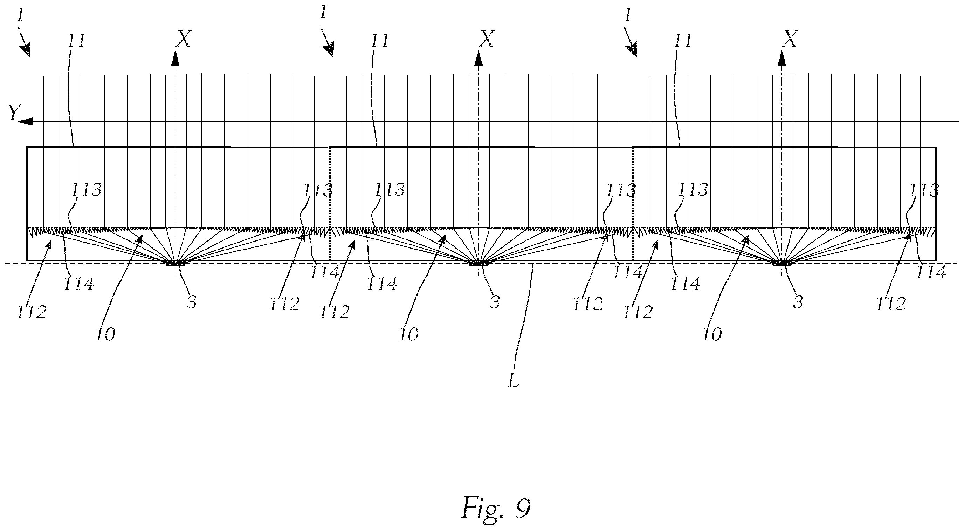

Abschließend zeigt **Figur 9** noch eine Anordnung (Vorrichtung) von drei nebeneinander liegenden erfindungsgemäßen Beleuchtungsvorrichtungen, wie sie z.B. in **Figur 4** oder **Figur 7** gezeigt sind, z.B. in einem Kraftfahrzeugscheinwerfer oder in einer Heckleuchte eines Kraftfahrzeuges, oder in einer Signalleuchte für ein Kraftfahrzeug.

Die Beleuchtungsvorrichtungen 1 sind unmittelbar nebeneinander, insbesondere aneinander angrenzend, angeordnet sind, vorzugsweise derart, dass die TIR-Optikkörper 2 der einzelnen Beleuchtungsvorrichtungen 1 aneinander mit ihren Seiten-Begrenzungsflächen anliegen oder die TIR-Optikkörper 2 einstückig miteinander ausgebildet sind. Vorzugsweise liegen die Lichtquellen 3 der verschiedenen Beleuchtungsvorrichtungen 1 auf einer Linie L, und die optischen Achsen X der Beleuchtungsvorrichtungen X verlaufen vorzugsweise wie dargestellt parallel zueinander.

## Patentansprüche

1. Beleuchtungsvorrichtung (1) für einen Kraftfahrzeugscheinwerfer und/oder für eine Heckleuchte eines Kraftfahrzeuges und/oder für eine Signalleuchte für einen Kraftfahrzeugscheinwerfer zum Erzeugen einer Lichtverteilung oder einer Teillichtverteilung oder eines Zwischenlichtbildes, wobei die Beleuchtungsvorrichtung (1) einen Optikkörper, im Folgenden als TIR-Optikkörper (2) bezeichnet, sowie eine Anzahl von Lichtquellen, insbesondere LED-Lichtquellen (3) umfasst, wobei z.B. genau eine Lichtquelle oder zwei oder mehr als zwei Lichtquellen vorgesehen sind,
wobei der TIR-Optikkörper (2) aus einem optisch transparenten Material gebildet ist,
wobei der TIR-Optikkörper (2) einen Lichteinkoppelbereich (10) und eine Lichtaustrittsfläche (11) aufweist, wobei Licht der Lichtquellen, welches über den Lichteinkoppelbereich (10) in den TIR-Optikkörper (2) eingespeist wird, zumindest teilweise über die Lichtaustrittsfläche (11) austritt und
wobei der TIR-Optikkörper (2) in einer ersten Richtung (Y), welche quer zu einer optischen Achse (X) des TIR-Optikkörpers (2) verläuft, von zwei einander gegenüberliegenden Begrenzungsflächen (4, 5) begrenzt wird,
wobei der Lichteinkoppelbereich (10) in einer zweiten Richtung (Z), welche quer zu der optischen Achse (X) des TIR-Optikkörpers (2) sowie quer zu der ersten Richtung (Y) verläuft, Seiten-Einkoppelflächen (110, 111) aufweist, und wobei
der Lichteinkoppelbereich (10) weiters eine zentrale Lichteinkoppelfläche (112) aufweist, wobei die zentrale Lichteinkoppelfläche (112) an die beiden Seiten-Einkoppelflächen (110, 111) angrenzt bzw. an diese anstößt,
und wobei Licht der zumindest einen Lichtquelle (3) über die zentrale Lichteinkoppelfläche (112) sowie über die, insbesondere zwei, Seiten-Einkoppelflächen (110, 111) in den TIR-Optikkörper (2) eingespeist werden kann, welches sich in dem TIR-Optikkörper (2) fortpflanzt und als Lichtbündel über die Lichtaustrittsfläche (11) aus dem TIR-Optikkörper (2) austritt, und wobei
zumindest eine der oder die Seiten-Lichteinkoppelflächen (110, 111) des Lichteinkoppelbereiches (10) derart mit oberen und/oder unteren Begrenzungsflächen (6, 7) des TIR-Optikkörpers (2) abgestimmt sind, dass an der oberen und/oder unteren Begrenzungsfläche (6, 7) des TIR-Optikkörpers (2) total-reflektierte Lichtstrahlen, betrachtet in vertikalen Schnitten durch den TIR-Optikkörper (2), sich parallel zueinander und vorzugsweise parallel zu der optischen Achse (X) des TIR-Optikkörpers (2) fortpflanzen,
**dadurch gekennzeichnet, dass**
die zentrale Lichteinkoppelfläche (112) eine, vorzugsweise glatte, Basisfläche (113) umfasst, auf welcher eine optische Struktur (114) angeordnet ist, welche derart ausgebildet ist, dass Lichtstrahlen bei ihrem Eintritt in den TIR-Optikkörper (2) über die zentrale Lichteinkoppelfläche (112) an dieser, betrachtet in einer Projektion in eine Ebene (A), welche von der optischen Achse (X) und der ersten Richtung (Y) aufgespannt wird oder zu dieser Ebene parallel ist, derart abgelenkt werden, dass sich diese Lichtstrahlen im TIR-Optikkörper (2), betrachtet in dieser Projektion, parallel zueinander fortpflanzen.

2. Beleuchtungsvorrichtung nach Anspruch 1, **dadurch gekennzeichnet, dass** sich die über die zentrale Lichteinkoppelfläche (112) eintretenden Lichtstrahlen in der Projektion in Richtungen parallel zu der optischen Achse (X) fortpflanzen.

3. Beleuchtungsvorrichtung nach Anspruch 1 oder 2, **dadurch gekennzeichnet, dass** bei zwei oder mehreren Lichtquellen (3) diese auf einer Linie (L) angeordnet sind.

4. Beleuchtungsvorrichtung nach einem der Ansprüche 1 bis 3, **dadurch gekennzeichnet, dass** bei zwei oder mehr Lichtquellen (3) diese in einer dritten Richtung verlaufend angeordnet sind, wobei insbesondere die Linie, auf welcher die Lichtquellen (3) angeordnet sind, in eine dritte Richtung verläuft, wobei vorzugsweise die dritte Richtung parallel zu der ersten Richtung (Y) verläuft.

5. Beleuchtungsvorrichtung nach einem der Ansprüche 1 bis 4, **dadurch gekennzeichnet, dass** die optische Struktur (114) Erhebungen (115) umfasst oder aus solchen Erhebungen (115) besteht, welche Erhebungen (115) auf der Basisfläche (113) angeordnet sind, und/oder Vertiefungen umfasst oder aus solchen Vertiefungen gebildet ist, welche in der Basisfläche (113) ausgebildet sind.

6. Beleuchtungsvorrichtung nach Anspruch 5, **dadurch gekennzeichnet, dass** in Schnitten durch den TIR-Optikkörper im Bereich der zentralen Lichteinkoppelfläche (112), welche Schnitte sich durch Schneiden mit Ebenen (A), welche von der optischen Achse (X) und der ersten Richtung (Y) aufgespannt sind bzw. zu dieser parallel verlaufen, die Erhebungen (115) bzw. Vertiefungen dreieckförmig ausgebildet sind.

7. Beleuchtungsvorrichtung nach Anspruch 5 oder 6, **dadurch gekennzeichnet, dass** ausgehend jeweils von einem zentralen Punkt (ZP), wo der maximale Abstand einer Erhebung (115) bzw. Vertiefung zu der Basisfläche (113) minimal oder Null ist, nach Außen hin, entlang der ersten Richtung (Y), der maximale Abstand, den jede Erhebungen (115) bzw. Vertiefungen zu der Basisfläche (112) aufweist, zunimmt.

8. Beleuchtungsvorrichtung nach einem der Ansprüche 5 bis 7, **dadurch gekennzeichnet, dass** ausgehend jeweils von einem zentralen Punkt (ZP) oder einer Zentralebene (X,Z-Ebene) nach Außen hin, zu beiden Seiten, in der Projektion die Erhebungen (115) bzw. Vertiefungen spiegelsymmetrisch zueinander ausgebildet sind.

9. Beleuchtungsvorrichtung nach einem der Ansprüche 1 bis 8, **dadurch gekennzeichnet, dass** die Basisfläche (113) nach Außen, d.h. in Richtung der zumindest einen Lichtquelle (3), gewölbt ist, z.B. in Form eines Teil-Zylindermantels, wobei vorzugsweise die Höhe des Teil-Zylinders parallel zu der ersten Richtung (Y) verläuft.

10. Beleuchtungsvorrichtung nach einem der Ansprüche 1 bis 9, **dadurch gekennzeichnet, dass** zumindest einer der oder die Seiten-Lichteinkoppelflächen (110, 111) jeweils eine optische Struktur, z.B. eine fresnelartige Struktur, beispielsweise zum horizontalen Parallelrichten, d.h. zum Parallelrichten der Projektionen von Lichtstrahlen in eine Ebene parallel zu der Ebene (A) bzw. in die Ebene (A), aufweisen.

11. Beleuchtungsvorrichtung nach einem der Ansprüche 1 bis 10, wobei die Beleuchtungsvorrichtung zum Erzeugen einer Fernlichtverteilung, einer Abblendlichtverteilung, einer Nebellichtverteilung, einer Vorfeldlichtverteilung, einer Nebellichtverteilung, einer Lichtverteilung einer Signallichtfunktion, z.B. eines Tagfahrlichtes, eines Fahrtrichtungsanzeiger oder einer Bremsleuchte, oder eines Teiles einer der genannten Lichtverteilungen eingerichtet ist.

12. Beleuchtungsvorrichtung nach einem der Ansprüche 1 bis 11, **dadurch gekennzeichnet, dass** das aus dem TIR-Optikkörper (2) austretende Licht direkt, d.h. ohne Beeinflussung durch weitere optische Vorrichtungen, oder nach Durchtritt durch eine optische Vorrichtung, z.B. eine Projektionsoptikvorrichtung etwa in Form einer Projektionslinse, in Form einer Lichtverteilung oder Teillichtverteilung abgebildet wird.

13. Vorrichtung umfassend ein oder mehrere Beleuchtungsvorrichtungen nach einem der Ansprüche 1 bis 12, beispielsweise zum Erzeugen einer Fernlichtverteilung, einer Abblendlichtverteilung, einer Nebellichtverteilung, einer Vorfeldlichtverteilung, einer Nebellichtverteilung, einer Lichtverteilung einer Signallichtfunktion, z.B. eines Tagfahrlichtes, eines Fahrtrichtungsanzeiger oder einer Bremsleuchte, oder eines Teiles einer der genannten Lichtverteilungen, wobei die Vorrichtung ein Kraftfahrzeugscheinwerfer oder eine Heckleuchte für ein Kraftfahrzeug oder eine Signalleuchte für ein Kraftfahrzeug ist, und wobei im Falle von mehreren Beleuchtungsvorrichtungen vorzugsweise alle Beleuchtungsvorrichtungen (1) identisch sind, und wobei beispielsweise, wenn zwei oder mehr Beleuchtungsvorrichtungen (1) vorgesehen sind, diese vorzugsweise unmittelbar nebeneinander, insbesondere aneinander angrenzend, angeordnet sind, vorzugsweise derart, dass die Lichtquellen (3) der verschiedenen Beleuchtungsvorrichtungen auf einer Linie liegen.

## Claims

1. Illumination device (1) for a motor vehicle headlamp and/or for a rear lamp of a motor vehicle and/or for a signal lamp for a motor vehicle headlamp, for generating a light distribution or a partial light distribution or an intermediate light image, wherein the illumination device (1) comprises an optical body, hereinafter referred to as TIR optical body (2), and a number of light sources, in particular LED light sources (3), wherein, for example, exactly one light source, or two or more than two light sources are provided,
wherein the TIR optical body (2) is made of an optically transparent material,
wherein the TIR optical body (2) has a light input region (10) and a light output area (11), wherein light from the light sources fed into the TIR optical body (2) via the light input region (10) emerges at least partially via the light output surface (11), and
wherein the TIR optical body (2) is, in a first direction (Y) extending transversely to an optical axis (X) of the TIR optical body (2), bounded by two mutually opposite boundary surfaces (4, 5), wherein the light input region (10) has lateral coupling surfaces (110, 111) in a second direction (2) transverse to the optical axis (X) of the TIR optical body (2) and transverse to the first direction (Y), and wherein
the light input region (10) further comprises a central light coupling surface (112), the central light coupling surface (112) being adjacent to or abutting the two lateral coupling surfaces (110, 111)
and wherein light from the at least one light source (3) can be fed into the TIR optical body (2) via the central light input region (112) as well as via the, in particular two, side input surfaces (110, 111), which light propagates in the TIR optical body (2) and emerges from the TIR optical body (2) as a light beam via the light output surface (11), and
the or at least one of the side light coupling surfaces (110, 111) of the light coupling region (10) being matched to upper and/or lower boundary surfaces (6, 7) of the TIR optical body (2) in such a way that at the upper and/or lower boundary surface (6, 7) of the TIR optical body (2) light rays that are reflected totally propagate, as seen in vertical sections through the TIR optical body (2), parallel to each other and preferably parallel to the optical axis (X) of the TIR optical body (2),
**characterized in that**
the central light coupling surface (112) comprises a, preferably smooth, base surface (113) on which an optical structure (114) is provided, which is formed such that light rays, when entering the TIR optical body (2) via the central light coupling surface (112), are deflected by the latter, as seen in a projection to a plane (A) which is defined by the optical axis (X) and the first direction (Y) or is parallel to this plane, in such a way that these light rays propagate parallel to each other within the TIR optical body (2), as seen in this projection.

2. Illumination device according to claim 1, **characterized in that** the light rays entering via the central light coupling surface (112) propagate in directions parallel to the optical axis (X) in the projection.

3. Illumination device according to claim 1 or 2, **characterized in that** in the case of two or more light sources (3), these are arranged on a line (L).

4. Illumination device according to any one of claims 1 to 3, **characterized in that** in the case of two or more light sources (3) these are arranged extending along a third direction, wherein in particular the line on which the light sources (3) are arranged extends along a third direction, wherein preferably the third direction extends parallel to the first direction (Y).

5. Illumination device according to any one of claims 1 to 4, **characterized in that** the optical structure (114) comprises, or consists of, protrusions (115), which protrusions (115) are arranged on the base surface (113), and/or comprises, or consists of, recesses formed in the base surface (113).

6. Illumination device according to claim 5, **characterized in that**, in sections through the TIR optical body in the region of the central light injection surface (112), which sections are formed by intersections with planes (A) spanned by or parallel to the optical axis (X) and the first direction (Y), the protrusions (115) or recesses are triangular.

7. Illumination device according to claim 5 or 6, **characterized in that**, starting respectively from a central point (ZP) where the maximum distance of a protrusion (115) or recess with respect to the base surface (113) is minimal or zero, the maximum distance that each protrusion (115) or recess has from the base surface (112) increases outwardly along the first direction (Y).

8. Illumination device according to any one of claims 5 to 7, **characterized in that**, starting respectively from a central point (ZP) or a central plane (X,Z-plane) outwards, in the projection the protrusions (115) or recesses are realized mirror-symmetrically to each other at both sides.

9. Illumination device according to any one of claims 1 to 8, **characterized in that** the base surface (113) is curved outwardly, i.e. in the direction of the at least one light source (3), e.g. in the form of a partial cylinder jacket, wherein preferably the height of the partial cylinder extends parallel to the first direction (Y).

10. Illumination device according to any one of claims 1 to 9, **characterized in that** the or at least one of the side light coupling surfaces (110, 111) comprise(s) an optical structure, e.g. a Fresnel-like structure, for example for directing horizontally parallel, i.e. for directing parallel the projections of light rays into a plane parallel to the plane (A) or into the plane (A).

11. Illumination device according to any one of claims 1 to 10, wherein the illumination device is configured to generate a high beam light distribution, a low beam light distribution, a fog light distribution, an apron light distribution, a fog light distribution, a light distribution of a signal light function, e.g. of a daytime running light, a direction indicator or a stop light, or a part of one of said light distributions.

12. Illumination device according to any one of claims 1 to 11, **characterized in that** the light emerging from the TIR optical body (2) is imaged directly, i.e. without being affected by further optical devices, or after passing through an optical device, e.g. a projection optical device, for example in the form of a projection lens, in the form of a light distribution or partial light distribution.

13. Device comprising one or more lighting devices according to any one of claims 1 to 12, for example for generating a high beam distribution, a low beam distribution, a fog light distribution, an apron light distribution, a fog light distribution, a light distribution of a signal light function, e.g. of a daytime running light, a direction indicator or a stop light, or a part of one of said light distributions, wherein the device is a motor vehicle headlight or a rear lamp for a motor vehicle or a signal light for a motor vehicle, and wherein in the case of several lighting devices preferably all lighting devices (1) are identical, and wherein, for example, if two or more lighting devices (1) are provided, these are preferably arranged directly next to one another, in particular adjacent to one another, preferably in such a way that the light sources (3) of the various lighting devices are on one line.

## Revendications

1. Dispositif d'éclairage (1) pour un projecteur de véhicule automobile et/ou pour un feu arrière d'un véhicule automobile et/ou pour un feu de signalisation pour un projecteur de véhicule automobile pour produire une répartition de lumière ou une répartition partielle de lumière ou une image lumineuse intermédiaire, le dispositif d'éclairage (1) comportant un corps optique, désigné ci-après par corps optique TIR (2), ainsi qu'un nombre de sources lumineuses, en particulier des sources lumineuses LED (3), par exemple exactement une source lumineuse ou deux ou plus de deux sources lumineuses étant prévues,
le corps optique TIR (2) étant formé d'un matériau optiquement transparent,
le corps optique TIR (2) comportant une zone d'injection de lumière (10) et une surface de sortie de lumière (11), la lumière des sources lumineuses qui est injectée dans le corps optique TIR (2) via la zone d'injection de lumière (10) sortant au moins partiellement via la surface de sortie de lumière (11) et
le corps optique TIR (2) étant limité dans une première direction (Y), qui s'étend transversalement à un axe optique (X) du corps optique TIR (2), par deux surfaces de délimitation (4, 5) opposées l'une à l'autre,
la zone de couplage de lumière (10) comportant des surfaces de couplage latérales (110, 111) dans une deuxième direction (Z) qui s'étend transversalement à l'axe optique (X) du corps optique TIR (2) ainsi que transversalement à la première direction (Y), et
la zone de couplage de lumière (10) comportant en outre une surface de couplage de lumière centrale (112), la surface de couplage de lumière centrale (112) étant adjacente ou contiguë aux deux surfaces de couplage de lumière latérales (110, 111),
et la lumière de ladite au moins une source lumineuse (3) pouvant être injectée dans le corps optique TIR (2) par l'intermédiaire de la surface centrale de couplage de lumière (112) ainsi que par l'intermédiaire des, en particulier deux, surfaces latérales de couplage de lumière (110, 111), laquelle se propage dans le corps optique TIR (2) et sort du corps optique TIR (2) sous forme de faisceau lumineux par l'intermédiaire de la surface de sortie de lumière (11), et
au moins l'une des ou les surfaces latérales de couplage de lumière (110, 111) de la zone de couplage de lumière (10) étant adaptée aux surfaces de délimitation supérieures et/ou inférieures (6, 7) du corps optique TIR (2) de telle sorte qu'au niveau de la surface de délimitation supérieure et/ou inférieure (6, 7) du corps optique TIR (2), les rayons lumineux totalement réfléchis, vus en coupes verticales à travers le corps optique TIR (2), se propagent parallèlement les uns aux autres et de préférence parallèlement à l'axe optique (X) du corps optique TIR (2),
**caractérisé en ce que**
la surface centrale de couplage de lumière (112) comprend une surface de base (113), de préférence lisse, sur laquelle est disposée une structure optique (114) qui est conçue de telle sorte que les rayons lumineux, lors de leur entrée dans le corps optique TIR (2) par la surface centrale de couplage de lumière (112) sont déviées sur la dernière, vu dans une projection dans un plan (A) qui est tendu par l'axe optique (X) et la première direction (Y) ou qui est parallèle à ce plan, de telle sorte que ces rayons lumineux se propagent parallèlement les uns aux autres dans le corps optique TIR (2), vu dans cette projection.

2. Dispositif d'éclairage selon la revendication 1, **caractérisé en ce que** les rayons lumineux qui entrent par la surface centrale de couplage de lumière (112) se propagent dans la projection dans des directions parallèles à l'axe optique (X).

3. Dispositif d'éclairage selon la revendication 1 ou 2, **caractérisé en ce que**, dans le cas de deux ou plusieurs sources lumineuses (3), celles-ci sont disposées sur une ligne (L).

4. Dispositif d'éclairage selon l'une quelconque des revendications 1 à 3, **caractérisé en ce que**, dans le cas de deux ou plusieurs sources lumineuses (3), celles-ci sont disposées en s'étendant dans une troisième direction, notamment la ligne sur laquelle sont disposées les sources lumineuses (3) s'étendant dans une troisième direction, de préférence la troisième direction étant parallèle à la première direction (Y).

5. Dispositif d'éclairage selon l'une quelconque des revendications 1 à 4, **caractérisé en ce que** la structure optique (114) comprend d'élévations (115) ou en est constituée, lesquels reliefs (115) sont disposés sur la surface de base (113), et/ou comprend de cavités formées dans la surface de base (113) ou en est constituée.

6. Dispositif d'éclairage selon la revendication 5, **caractérisé en ce que** dans des coupes à travers le corps optique TIR dans la zone de la surface centrale de couplage de lumière (112), lesquelles coupes se forment par intersection avec des plans (A) qui sont tendus par l'axe optique (X) et la première direction (Y) ou s'étendent parallèlement à celle-ci, les élévations (115) ou les cavités sont réalisées en forme de triangle.

7. Dispositif d'éclairage selon la revendication 5 ou 6, **caractérisé en ce que**, à partir d'un point central (ZP) respectif où la distance maximale d'une élévation (115) ou cavité à la surface de base (113) est minimale ou nulle, la distance maximale que chaque élévation (115) ou cavité présente à la surface de base (112) augmente vers l'extérieur le long de la première direction (Y).

8. Dispositif d'éclairage selon l'une quelconque des revendications 5 à 7, **caractérisé en ce que**, à partir d'un point central (ZP) respectif ou d'un plan central (X, Z) vers l'extérieur, de part et d'autre, les élévations (115) ou les cavités sont symétriques les uns par rapport aux autres dans la projection.

9. Dispositif d'éclairage selon l'une quelconque des revendications 1 à 8, **caractérisé en ce que** la surface de base (113) est bombée vers l'extérieur, c'est-à-dire en direction de ladite au moins une source lumineuse (3), par exemple sous la forme d'une enveloppe cylindrique partielle, la hauteur du cylindre partiel étant de préférence parallèle à la première direction (Y).

10. Dispositif d'éclairage selon l'une quelconque des revendications 1 à 9, **caractérisé en ce qu'**au moins l'une des ou les surfaces latérales de couplage de lumière (110, 111) comportent chacune une structure optique, par exemple une structure de type Fresnel, par exemple pour le parallélisme horizontal, c'est-à-dire pour le parallélisme des projections de rayons lumineux dans un plan parallèle au plan (A) ou dans le plan (A).

11. Dispositif d'éclairage selon l'une quelconque des revendications 1 à 10, dans lequel le dispositif d'éclairage est agencé pour générer une répartition de feu de route, une répartition de feu de croisement, une répartition de feu de brouillard, une répartition de feu d'avant, une répartition de feu de brouillard, une répartition de feu d'une fonction de signalisation, par exemple de feu de jour, de feu indicateur de direction ou de feu stop, ou une partie de l'une desdites répartitions de lumière.

12. Dispositif d'éclairage selon l'une quelconque des revendications 1 à 11, **caractérisé en ce que** la lumière sortant du corps optique TIR (2) est reproduite directement, c'est-à-dire sans être influencée par d'autres dispositifs optiques, ou après avoir traversé un dispositif optique, par exemple un dispositif optique de projection, par exemple sous la forme d'une lentille de projection, sous la forme d'une répartition lumineuse ou d'une répartition lumineuse partielle.

13. Dispositif comprenant un ou plusieurs dispositifs d'éclairage selon l'une quelconque des revendications 1 à 12, par exemple pour générer une répartition de feu de route, une répartition de feu de croisement, une répartition de feu de brouillard, une répartition de feu d'avant, une répartition de feu de brouillard, une répartition de la lumière d'une fonction de signalisation, par exemple de feu de jour, de feu indicateur de direction ou de feu stop, ou une partie de l'une desdites répartitions de lumière, le dispositif étant un projecteur de véhicule automobile ou un feu arrière pour un véhicule automobile ou un feu de signalisation pour un véhicule automobile, et dans le cas de plusieurs dispositifs d'éclairage, tous les dispositifs d'éclairage (1) étant de préférence identiques, et dans les cas de, par exemple, deux ou plusieurs dispositifs d'éclairage (1) étant prévus, ceux-ci sont de préférence disposés directement les uns à côté des autres, en particulier de manière contiguë, de préférence de telle sorte que les sources lumineuses (3) des différents dispositifs d'éclairage se trouvent sur une ligne.
